Europäisches Patentamt

European Patent Office

Office européen des brevets

(11) Publication number: **0 076 324**
**B1**

(12) **EUROPEAN PATENT SPECIFICATION**

(45) Date of publication of patent specification: **11.06.86**

(21) Application number: **82901011.5**

(22) Date of filing: **06.04.82**

(86) International application number:
**PCT/JP82/00106**

(87) International publication number:
**WO 82/03351 14.10.82 Gazette 82/25**

(51) Int. Cl.⁴: **B 23 K 9/04,** B 23 K 9/08, B 23 K 25/00

(54) **A process for controlling welding when using a strip electrode.**

(30) Priority: **08.04.81 JP 51731/81**

(43) Date of publication of application:
**13.04.83 Bulletin 83/15**

(45) Publication of the grant of the patent:
**11.06.86 Bulletin 86/24**

(84) Designated Contracting States:
**DE FR**

(56) References cited:
**FR-A-2 179 960**
**FR-A-2 453 704**
**JP-A-49 017 349**
**JP-B-53 008 299**

(73) Proprietor: **KAWASAKI STEEL CORPORATION**
**No. 1-28, 1-Chome Kitahonmachi-Dori**
**Chuo-Ku, Kobe-Shi Hyogo 651 (JP)**

(72) Inventor: **YAMASHITA, Itaru**
**293-31, Naganuma-cho**
**Chiba-shi Chiba 281 (JP)**
Inventor: **TATEISHI, Junji**
**D-501 723, Nitona-Cho**
**Chiba-shi Chiba 280 (JP)**

(74) Representative: **Overbury, Richard Douglas et al**
**HASELTINE LAKE & CO Hazlitt House 28**
**Southampton Buildings Chancery Lane**
**London WC2A 1AT (GB)**

## Description

Technical Field

The present invention relates to a process for controlling welding when a strip electrode is used, and particularly when surfacing welding, in which process no manual controlling operations need to be carried out in the course of welding and welded portions having no defects, such as undercutting, lack of penetration or irregular bead edges, are obtained.

When welding is carried out using a strip electrode, weld beads having a broad width and a shallow penetration in one pass can be obtained, so that this can be advantageously used in surface welding for improving surface hardening or corrosion resistance. Welding using a strip electrode includes (1) arc fusing welding and (2) electro-slag fusing welding and the present invention is applicable to both processes (1) and (2). Submerged arc welding is carried out by forming an arc between a base metal to be welded and a strip electrode and electro-slag welding utilizes resistant heating of a molten slag bath of depth about 10 mm and formed below or behind a strip electrode, electric current being passed to the slag by directly immersing the strip electrode in the molten slag bath.

Although these two processes are rather different *per se*, both use a large direct current, so that complicated factors, such as the action of the magnetic field caused by the welding current, the pulling phenomenon of parallel currents and the Pinch effect, are combined together. Although in the case of process (1) there is the specific phenomenon of the arc shifting to the central portion in the width direction of the strip electrode, in both processes an inward flow of molten slag and metal towards the central portion from both edge portions of the strip electrode occurs and therefore defects, such as undercutting and lack of penetration, are caused at both edge portions or at one edge portion of the bead and further an irregular bead edge is formed. These defects are common in both processes (1) and (2) and similar behaviors are found. The generation of the above described defects is more noticeable as the width of the strip electrode used for the welding increases and this is common in both processes (1) and (2). Recently electrodes having a width of more than 100 mm have been used and there has been a strong need to prevent and obviate these defects.

Background Art

In the arc fusing welding process, it has been proposed that the direction of the arc be oriented in the same direction as the orienting direction of the electrode or to a slightly lateral outward direction by an external magnetic field or an induced magnetic field respectively in Japanese Patent Application Publication Nos. 8,348/69 and 8,349/69. Japanese Patent Publication No. 21,187/79 discloses that a portion parallel to the welding line along a given length in the vicinity of the surface of a metal to be welded be formed with a conductor which connects the electric power source for welding and a welding energizing chip so that the arc and the molten metal are pulled toward the side edges. Recently, the applicant has made developments regarding the electro-slag welding process wherein the flow direction of the molten pool is oriented towards both the lateral edges of the electrode from the portion just beneath the electrode by applying an external magnetic field.

However, even though the above described prior proposals have the effect of causing a forced variation in the orienting direction of the arc and the flow direction of the molten pool whereby the flow can be oriented laterally of the strip electrode, the fundamental problems mentioned hereinafter have never been solved and thus these proposals have not been used in practice since they are troublesome and unstable.

When arc welding processes as above proposed are applied to actual submerged arc welding, the molten metal pool and the molten slag bath formed behind the electrode, excluding the arc cavity just below the strip electrode, are completely covered with welding flux so that the welding status, and particularly the deflection of the arc and the flow state of the molten pool, can not be observed during operation. After the molten slag bath and the molten metal pool are completely solidified, the flux thereon is removed and the solidified slag is removed and only then can the finished state of the solidified metal bead be confirmed. Thus the status of the molten pool just below and behind the electrode, which is most important, can not be ascertained during the welding and there is no alternative but to make assumptions about said status from the bead form after a lapse of some time.

When electro-slag welding using a strip electrode, the molten pool just below and behind the electrode is exposed, so that the flow status of the molten pool can be observed by the naked eye and therefore the welding can be carried out while confirming the flow status and controlling the intensity of the external magnetic field. However, even in this case, the external magnetic field needs to be manually controlled with respect to the behavior of the molten pool which varies from moment to moment so that the operator is exposed to the strong radiant heat from the exposed molten pool for a long time from welding start to welding finish. This causes problems and it is difficult to obtain a satisfactory uniform bead.

Disclosure of Invention

The present invention aims to solve the above described problems of the prior proposals and to provide a process for automatically controlling the operation of an electromagnetic correcting means which invention is applicable to both the submerged arc welding process and the electro-slag welding process where welding is carried out under the action of a magnetic field due to the welding current between a strip electrode and the base metal to be welded while energizing the electromagnetic correcting means to generate an external magnetic field which opposes the above described action of the magnetic field caused by the welding current. This object is attained by providing a detector which detects the combined magnetic flux, in the vicinity of the molten pool, of the magnetic field due to the above described welding current and the above described external magnetic field due to the electromagnetic correcting means which modifies the magnetic field due to the above described welding current and the molten metal flow and by controlling the action of the above described electromagnetic correcting means in accordance with the detected magnetic flux.

The inventors have made a study of the prior proposals in order to solve their problems and fully clarify the causes of the problem.

When the states of the arc and the molten pool are controlled by the above described external magnetic field or induced magnetic field in the prior submerged arc welding process, the most important deflection of the arc and flow state of the molten pool can not be observed by the naked eye during the welding operation but the actual state is as follows.

The welding condition in the case of a conventional strip electrode having a thickness of about 0.4 mm and a width of about 100 mm is mentioned as follows as one example.

Welding current (DC, Base metal): 1500 Amp.
Welding voltage: 30 Volt.
Welding rate: 150 mm/min.

In this case, the state where the form of the weld bead can be confirmed, that is the state where the slag is completely solidified and can be removed from the bead, occurs at a location more than 150 mm, usually more than 200 mm away from the electrode. In other words the state cannot be confirmed until more than 1 minute in time after the arc has passed through. Thus, the states of the arc and the molten pool can be confirmed only indirectly by examining the solidified bead form at a stage which is later in terms of both position and time.

Even if the melting behavior could have been observed by the naked eye at all stages during the course of welding, the health of the operators would be likely to be damaged by the severe radiant heat produced and manual control relying upon observation of the naked eye would be apt to become uncertain and the problem can not be solved unless reliance is placed upon automatic control.

In JP—B2 53—8299 there is described a submerged arc welding process using a strip electrode. With a view to counteracting the magnetic field which is generated by the welding current and which causes arc distortion and consequent undercutting, a magnetic compensation coil is located around the strip electrode and the component supplying electric power thereto. Magnetic flux detectors are located on the coil at opposite sides thereof and a control device is provided to balance the outputs from the detectors. In use, electric current is supplied to the coil under the control of the control device such that the magnetic flux generated by the welding current is interrupted by the magnetic flux generated by the compensation coil so as to prevent distortion of the arc. In this process, however, the magnetic flux detectors tend to be influenced by the magnetic force of the compensation coil so that the magnetic flux in the vicinity of the molten pool adjacent to the strip electrode is not accurately detected and controlled.

According to the present invention, in a surface welding process wherein a welding current is applied between a strip electrode and the base metal to be welded, first and second electromagnetic correcting means are provided adjacent first and second edges, respectively of the strip electrode to produce a magnetic field which opposes the magnetic field set up by the welding current. This modifies the flow of the molten metal in the molten pool. First and second devices for detecting magnetic flux, such as Hall elements, that is elements causing the Hall effect, are suitably arranged near the molten pool at the lower end of the strip electrode to detect the degree of the current distribution (magnetic flux density) on first and second sides, respectively of the centre line of the strip electrode. The magnitudes of the signals detected by the first and second devices are used to vary the output of the first and second electromagnetic correcting means respectively. This changes the orienting direction of the arc and the flow of metal in the molten pool whereby stable welding is automatically carried out. The electromagnetic correcting means may be electromagnetic coils, apparatus for applying parallel current, or other suitable electrically operating apparatus.

The present invention provides a process for automatically controlling welding using a strip electrode as mentioned above irrespective of whether or not the behavior of the arc and molten pool can be observed by the naked eye. Thus the present invention can effect a uniform and stable welding in both the submerged arc welding process and the electro-slag welding process.

For a better understanding of the invention and to show how the same may be carried into effect, reference will now be made, by way of example, to the accompanying drawings, in which:—

Figs. 1(a) and (b) are diagrammatic views illustrating welding behavior when surfacing welding using a strip electrode in a submerged arc welding process;

Figs. 2(a) and (b) are similar diagrammatic views to those of Figs. 1(a) and (b) but illustrating an electro-slag welding process;

Fig. 3 is a diagrammatic view illustrating a surfacing welding process;

Fig. 4 is a diagrammatic view illustrating electromagnetic correction in a submerged arc welding process;

Fig. 5 is a series of cross-sectional views through weld beads formed by the process shown in Fig. 4;

Fig. 6 is a diagrammatic view illustrating an embodiment of the present invention as applied to electro-slag welding;

Figs. 7(a) and (b) are views illustrating the manner in which the electromagnetic correcting means may be controlled in accordance with the invention;

Fig. 8 is a view illustrating test positions for weld beads;

Figs. 9(a) and (b) show a control circuit used in an embodiment of the present invention; and

Figs. 10(a)—(f) are views showing alternative locations of the detector in accordance with the present invention.

Best Mode of Carrying Out the Invention

The present invention will be explained hereinafter in detail with respect to a practical mode of carrying it out but firstly an explanation will be made of welding using a strip electrode.

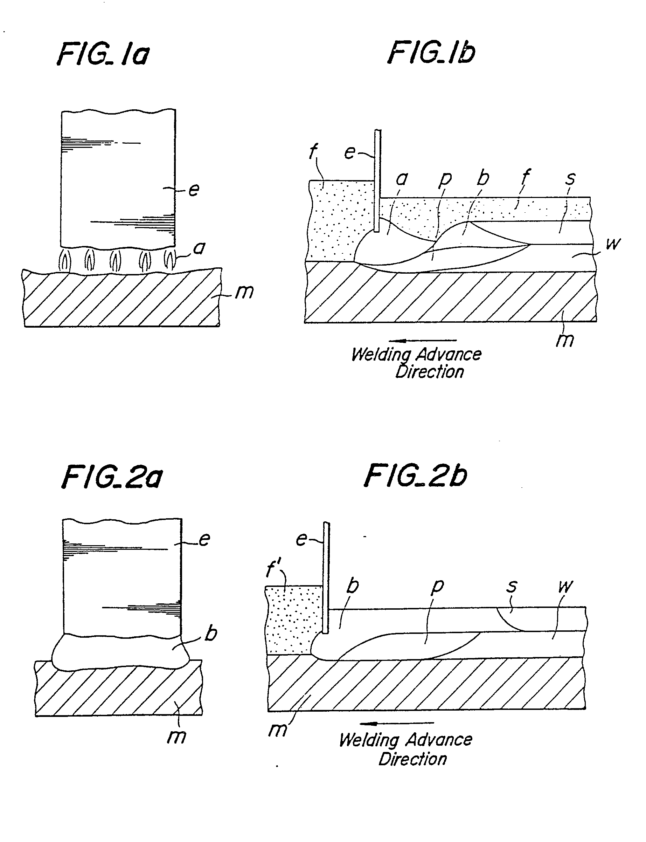

Fig. 1 shows the welding behavior when surfacing welding using a strip electrode in a submerged arc welding process and Fig. 2 shows the behavior in an electro-slag welding process.

In these figures, e is a strip electrode, a is an arc cavity, b is a molten slag bath, f and f' are welding flux, p is a molten metal pool, s is solidified slag, w is solidified metal and m is base metal to be welded.

In this case, the flow of the molten slag bath b and the molten metal pool p as a result of the magnetic action arising from the complicated distribution of the welding current prevents the formation of a stable surfacing weld bead and the problems involved in the prior proposals to apply various electromagnetic correcting means have already been mentioned. It has been found that the problems as mentioned hereinafter are particularly important in practice.

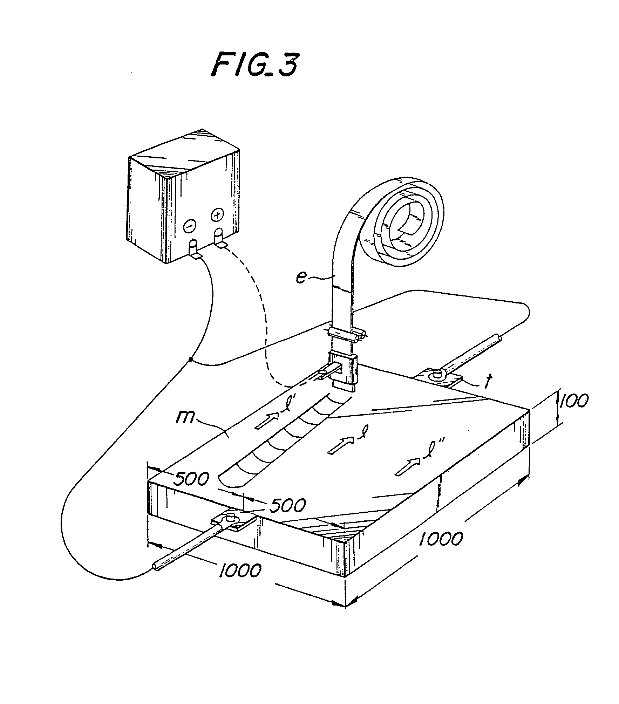

As shown in Fig. 3, grounds (electrical connectors) for supplying a welding power source to a base metal m are provided at the front and rear of the base metal with respect to the width of the base metal. The base metal has a width of 1000 mm, a length of 1000 mm and a thickness of 100 mm. A strip electrode e is perpendicularly directed to an upper surface of the base metal to be welded and the polarity of the base metal and the electrode are made negative and positive respectively.

Surfacing welding on a steel sheet was effected using this arrangement under the following conditions:—

Size of strip electrode: Thickness: 0.4 mm
                       : Width: 100 mm
Component of electrode: SUS 309
Flux: KBS-150 (Firing type)
Welding current: 1500 Amp.
Welding voltage: 30 Volt.
Welding rate: 15 cm/min.

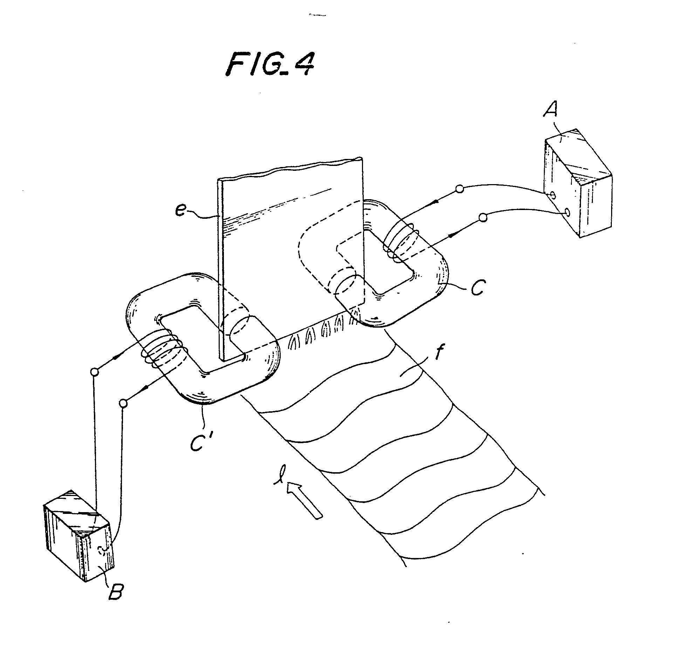

In this case, among the above described prior proposals for correcting the orienting direction of the arc, a process wherein electromagnetic coils C and C' were arranged around the edges of the strip electrode as shown in Fig. 4, was adopted.

The welding was effected in one pass along each of three rows viz. line I extending centrally between the ends at which the grounds t—t were provided and lines I' and I" positioned on the left and right sides of said line I as shown in Fig. 3.

For the original pass I, the exciting currents of the current controllers (A) and (B) were previously adjusted to a condition such that a good bead was formed with no undercutting at either edge portion of the bead at the start of welding and a bead was welded on the surface of the base metal to be tested along a length of about 900 mm under the adjusted condition without effecting further adjustment thereafter.

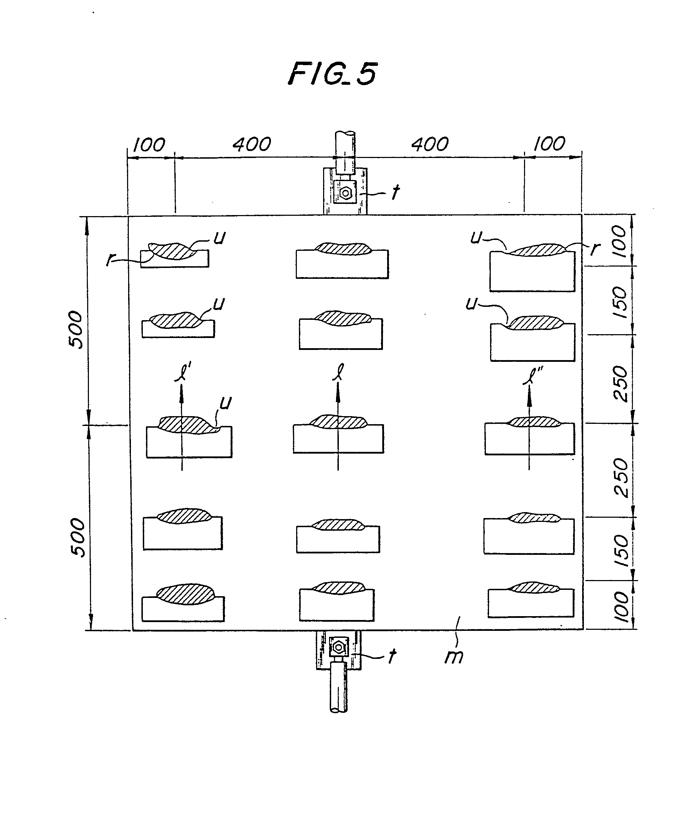

The bead form of each of the obtained passes I, I' and I" is shown in Fig. 5. In the welded pass I provided in the central portion of the steel sheet, the bead form when starting the welding was substantially held until the welding was finished and one substantially stable head was obtained. However, in the case of the beads formed in the weld passes I' and I" along the left and right lateral edge portions of the steel sheet, when the advance of the welding exceeded the middle position (which is half of the distance between the grounds t—t), undercutting u occurred on one side and partial slag inclusion r was found. Thus the good bead form obtained when starting the welding was not maintained.

These experimental results show that the behavior of the arc and the molten pool varies every moment according to the relative relationship with the position of the ground t and to the thermal and electric behavior at the central portion and the edge portion of the steel sheet so that it is impossible to deal with the above described variations merely by controlling the exciting current alone when starting the welding.

Therefore, it is necessary to control the welding conditions (in this case the exciting current) in dependence on the variation of the above described behavior from moment to moment. However in the case of submerged arc welding, the behavior at every moment during the course of welding can not be observed by the naked eye for the already mentioned reason, so that it has been impossible to deal with the above described variation of behavior by the prior proposals. The situation is similar in electro-slag welding wherein even if observation with the naked eye is feasible, continued observation is difficult.

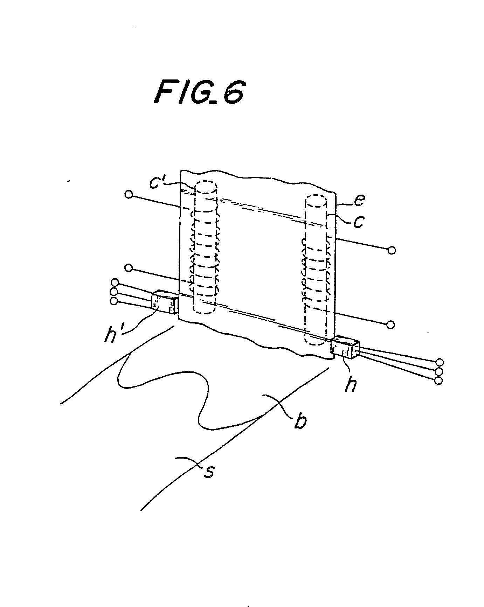

The present invention will be explained with respect to the situation wherein electro-slag welding is effected using a strip electrode with reference to Fig. 6.

The reason why the electro-slag welding process is adopted herein is because the molten pool can be observed and the effect of controlling the electromagnetic correcting means can be directly and easily confirmed.

Referring to Fig. 6 first and second electromagnetic coils C and C' are arranged in front of the strip electrode e in the advance direction of welding so that these coils are located on opposite sides of the electrode centre line substantially at first and second lateral edge portions of the electrode with their longitudinal axes essentially perpendicular to the base metal surface. Hall elements h, h' are arranged at opposite sides of the electrode centre line at the edges of the strip electrode at the lower end thereof adjacent the molten pool. The Hall elements h and h' are connected to a control device through lead lines. The Hall elements h and h' detect the magnetic flux density in the vicinity of the molten pool by utilizing the Hall effect of the elements and a voltage output corresponding to the magnetic flux density obtained. In general, a Hall IC (integrated circuit) is advantageously used.

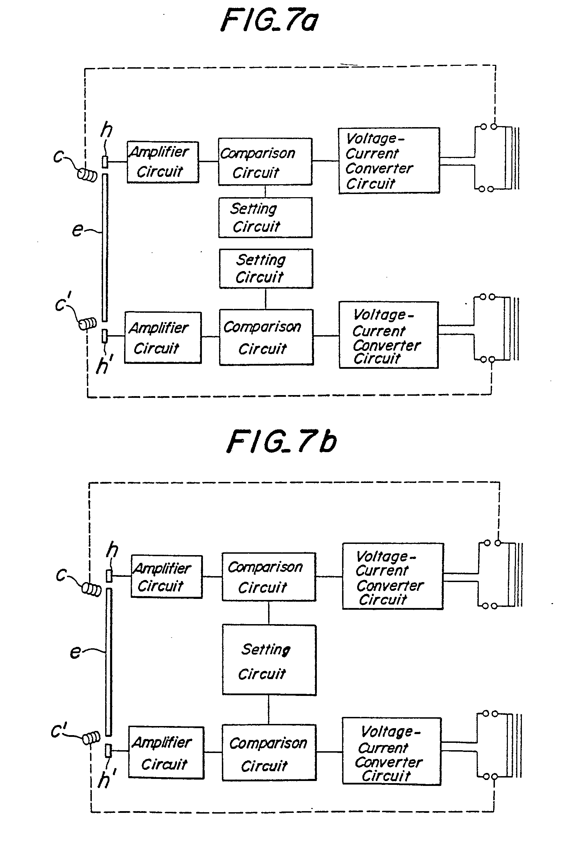

The control mechanism is explained with reference to Fig. 7.

The electromagnetic coils C and C' are arranged so that they are positioned in front of the electrode at both the edges. The flow of the molten pool is controlled by the external magnetic field caused by the electromagnetic coils C and C' as in the prior proposals. The essence of the present invention lies in that the intensity of the magnetic field generated from the electromagnetic coils C and C' is automatically varied depending upon the variation of the other external conditions so that the original good state is always maintained whereby a given flow state of the molten pool is always maintained and a stable bead form is obtained.

Heretofore, in accordance with the above-mentioned proposals, the intensity of the exciting current passing through the electromagnetic coils C and C' has been manually controlled by an operator while observing the variation of the flow state of the molten pool b. However according to the present invention, the variation of the external state is detected by the Hall elements and the intensity of the exciting current applied to the electromagnetic coils C and C' is automatically controlled by the detected signal. In this example, the Hall elements h and h' are arranged at both the lateral edges of the electrode.

When a welding current flows through a strip electrode e, a magnetic field is formed around the electrode and the intensity of the magnetic field is varied by the current distribution in the strip electrode e and the distance from the grounds of the base metal but the behavior of the magnetic field at both the lateral edges of the electrode has the greatest influence upon the flow of the molten pool P and this embodiment of the present invention detects this behavior.

In order to facilitate explanation, consideration will be given to the Hall element at one side only. In Fig. 7(a), the intensity of the magnetic field in the vicinity of the molten pool at the lateral edge of the strip electrode is detected by the Hall element (h) and the detected signal is amplified and supplied to an adjacent comparison circuit as a voltage. The comparison circuit compares the input detected voltage with the set value of a setting circuit. The output of the comparison circuit is supplied to a voltage-current converter circuit which generates a current output having a value corresponding to the magnitude of the compared value of the comparison circuit. The output current of the converter is supplied to the coil C whereby the intensity of the exciting current is controlled.

Explanation will be made in more detail. The coil C is arranged in front of the right side edge of the strip electrode e as mentioned above, so that when the exciting current flows to the coil C, the distribution of lines of magnetic force at the lateral edge portion of the strip electrode e varies. By suitably selecting the exciting current the behavior of the molten pool flow can be improved. Thus the value (voltage) detected by the Hall element h at which the flow behavior is best, is preferably previously set in the setting circuit so that the exciting current is controlled accordingly.

This set value varies depending upon the position where the Hall element is arranged and depending upon the thickness and width of the strip electrode e. The position of the Hall element h is easily fixed by a suitable means, for example by a conduct jaw and the thickness and width of the strip electrode e is constant during welding so that there is no problem in practice.

In an example of this procedure, the above described comparison was effected and, until the difference became 0, the exciting current supplied to the electromagnetic coil C from the voltage-current converter circuit was increased. Conversely when the detected value was smaller than the set value, the operation was effected so as to decrease the exciting current. The design was such that the comparison value always tended towards 0.

The above described control is effected in quite the same manner in the electromagnetic coil C' using Hall element h' on the opposite side so that the variation of the status at the left and right lateral edge portions is detected whereby the external magnetic field is controlled so that the desired value is obtained and a good bead can be formed. The use of Hall elements is advantageous because of the following reasons:

(1) The detection of the magnetic field is feasible by means of a conventional coil but the weight and the size of the coil have to be large so the apparatus itself has to be large. However, the Hall element can be small and thus is very advantageous. In particular, if Hall IC is used, the Hall element can be even smaller.

(2) The accuracy of detection of the magnetic flux density is high and therefore the ability to detect the status variation is excellent.

In an experiment welding was carried out in the above manner to produce beads on the right side, center and left side of a base metal sheet in substantially the same way as shown in Fig. 5. The welding conditions in this case were as follows:—

Size of strip electrode: Thickness: 0.4 mm
                      : Width: 150 mm
Component of electrode: SUS 309
Flux: KFS-150 (fusing type)
Welding current: 2500 Amp.
Welding voltage: 26 Volt.
Welding rate: 15 cm/min.
Electrode: Base metal:—
Electromagnetic coil:
(1) Direction of magnetic field
Electromagnetic coil C: Downward magnetic field
Electromagnetic coil C': Upward magnetic field
(2) Turn number of electromagnetic coil:
In both left and right: 800 turns, iron core.

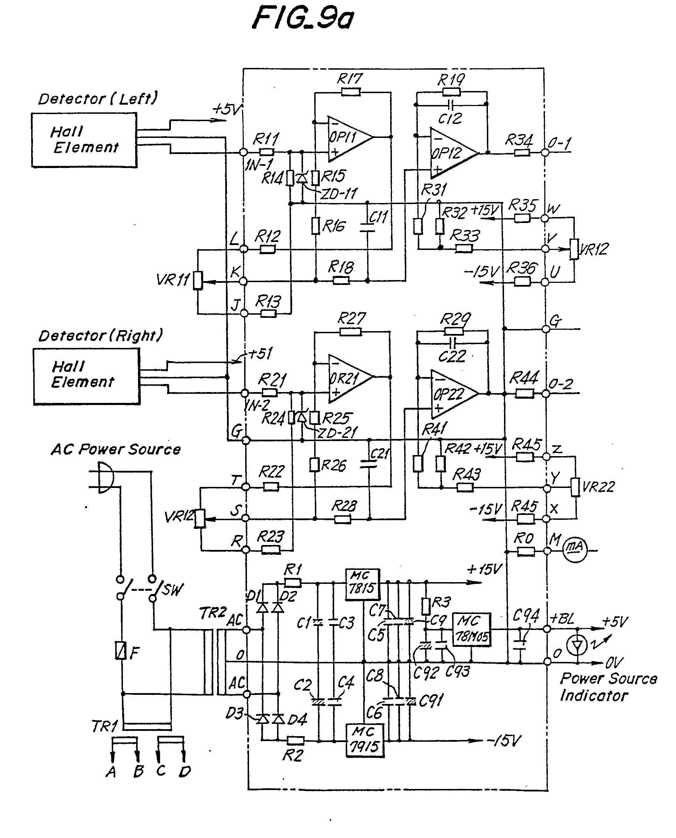

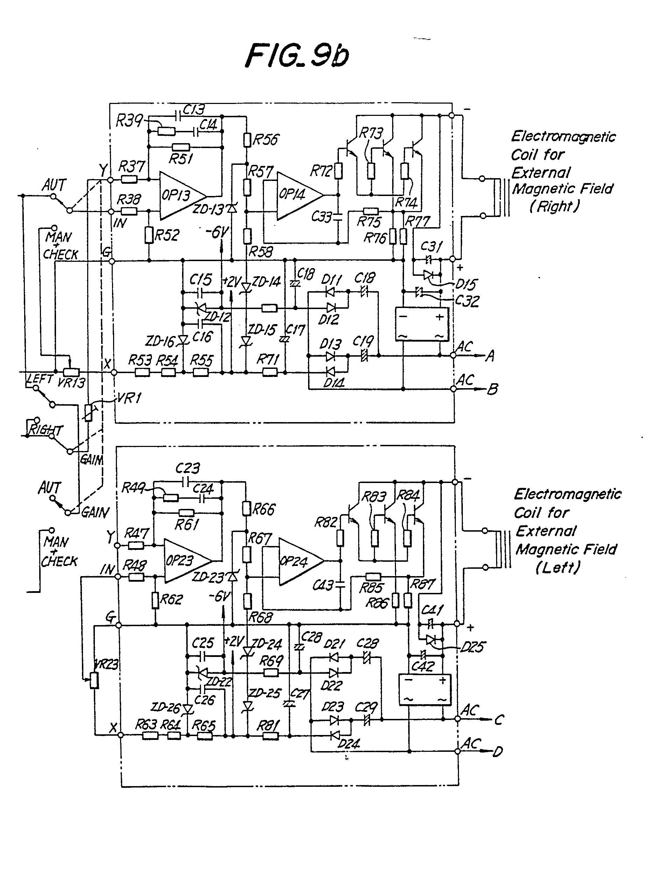

The control circuit used in this case is shown in Figs. 9(a) and 9(b).

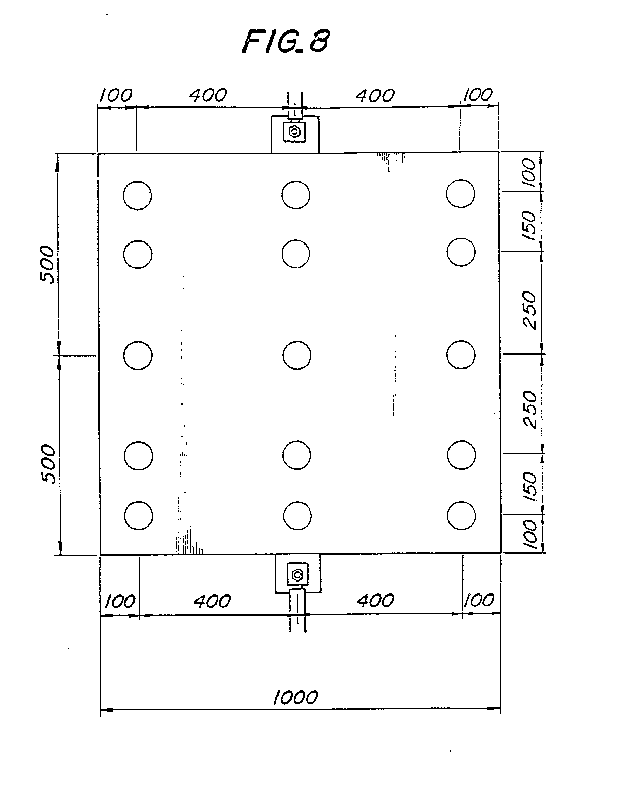

The form of each weld bead obtained using the above described conditions was investigated at the five points shown in Fig. 8 between the weld-started portion and the weld-finished portion and a good uniform bead form was found at each point. The behavior of the flow of the molten pool during welding was constant and stable.

During this welding, it was confirmed that the exciting current of the electromagnetic coils C and C' automatically varied over a range of ±1.5 Amp about a mean of 2.5 Amp. The welding was completely automatically controlled.

As mentioned above, it can be seen that the present invention using the Hall elements is very effective for increasing the practicality of welding process using strip electrodes.

In the above described example, explanation was made with respect to the case where an electro-slag welding process was carried out by arranging the electromagnetic coils C and C' in front of the strip electrode. However when the above described control for the electromagnetic correction was applied in the case where the strip electrode e was placed between the electromagnetic coils C and C' in the manner shown in Fig. 4, good results were also obtained. Furthermore, similar results can be obtained in an arc fusing system, by locating the Hall elements at both the lateral edge portions of the electrode and using a control circuit between the coils and the Hall elements as shown in Fig. 9.

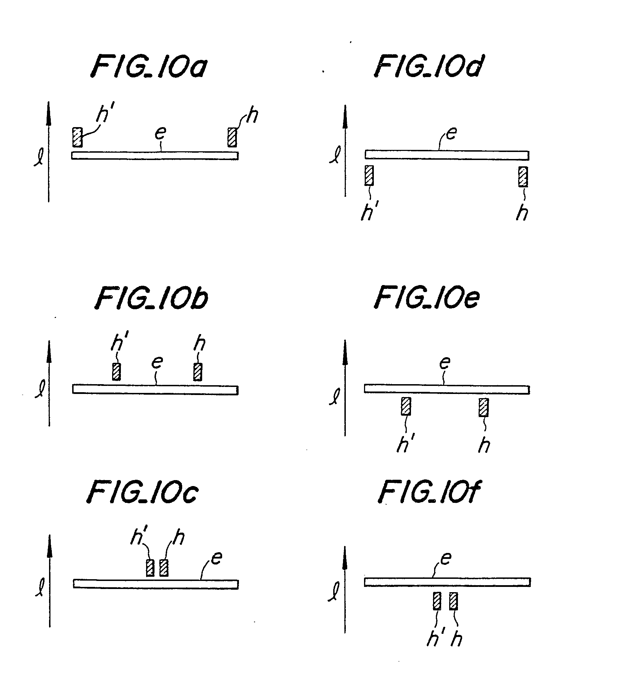

In the above described examples, the Hall elements h and h' were arranged at the lateral edges of the strip electrode but their locations are not limited to the lateral edges. As shown in Fig. 10, even if these Hall elements are arranged at the front or rear of the welding direction (arrow mark) of the strip electrode 3 or at a position which is slightly shifted towards the center line from the edge or even at adjacent the central portion itself, the object of the present invention can be attained.

However, it is particularly desirable for two or more Hall elements to be used, because if the detection is made using one Hall element only, the behavior of one side only can be ascertained and an even effect can not be obtained over the strip electrode.

The controllability can be naturally more improved by increasing the number of the positions to be tested by using three or more Hall elements.

In addition, as shown in Fig. 7(b), an alternative setting circuit may be commonly used.

Industrial Applicability

As explained above, the present invention can result in the stable formation of a broad weld bead having no undercutting and no slag inclusion when using a strip electrode and is of wide application. It can be used to carry out surfacing welding of high reliability by the submerged arc welding process or the electro-slag welding process.

**Claims**

1. A process for controlling a welding operation in which an electric current is passed between a broad strip electrode and a base metal to be welded while moving said electrode along a surface of the base metal, energizing an electromagnetic correcting means which generates a magnetic field opposing the action of the magnetic field caused by the electric current passing through the electrode and modifies the flow of molten metal in the molten pool formed during welding, detecting the magnetic flux, caused by the combined magnetic fields, and controlling the current applied to the electromagnetic correcting means in accordance with the detected flux characterised in that a first electromagnetic correcting means is provided adjacent to a first edge of the strip electrode, a second electromagnetic correcting means is located adjacent to a second edge of the strip electrode, the current supplied to the first electromagnetic correcting means is controlled in dependence on the flux detected in the vicinity of the molten pool at a first side of the centre line of the strip electrode, and the current supplied to the second electromagnetic correcting means is controlled in dependence on the flux detected in the vicinity of the molten pool at a second side of the centre line of the strip electrode.

2. A process according to claim 1 wherein each electromagnetic correcting means is in the form of a coil.

3. A process according to claim 1 or 2 wherein a Hall element is used for detecting the magnetic flux.

4. A process according to any one of the preceding claims wherein the detected magnetic flux is compared with a set value and the current supplied to the electromagnetic correcting means is controlled accordingly so that the detected magnetic flux corresponds to the set value.

5. A process according to any preceding claim wherein the welding operation is a submerged arc process.

6. A process according to any one of claims 1 to 4 wherein the welding operation is an electro-slag process.

## Patentansprüche

1. Verfahren zur Steuerung eines Schweißvorgangs,

bei dem elektrischer Strom zwischen einer breiten Streifenelektrode und einem zu schweißenden Basismetall fließt während die Elektrode längs Oberfläche des Basismetalls bewegt wird,

bei dem eine elektromagnetische Korrektureinrichtung erregt wird, die ein der Wirkung des von dem durch die Elektrode fließenden Strom erzeugten Magnetfelds entgegenwirkendes Magnetfeld erzeugt und die das Fließen des geschmolzenen Metalls in dem während des Schweißens erzeugten Schmelzbad verändert,

bei dem der von den kombinierten Magnetfeldern verursachte magnetische Fluß erfaßt wird und

bei dem der der elektromagnetischen Korrektureinrichtung zugeführte Strom abhängig von dem erfaßten magnetischen Fluß gesteuert wird, dadurch gekennzeichnet,

daß eine erste elektromagnetische Korrektureinrichtung in der Nähe einer ersten Kante der Streifenelektrode angeordnet wird,

daß eine zweite elektromagnetische Korrektureinrichtung in der Nähe einer zweiten Kante der Streifenelektrode angeordnet wird,

daß der der ersten elektromagnetischen Korrektureinrichtung zugeführte Strom abhängig von dem in der Nachbarschaft des Schmelzbades auf der ersten Seite der Mittellinie der Streifenelektrode gemessenen Fluß gesteuert wird und

daß der der zweiten elektromagnetischen Korrektureinrichtung zugeführte Strom abhängig von dem in der Nachbarschaft des Schmelzbades auf der zweiten Seite der Mittellinie der Streifenelektrode gemessenen Fluß gesteuert wird.

2. Verfahren nach Anspruch 1, bei dem jede elektromagnetische Korrektureinrichtung als Spule ausgebildet ist.

3. Verfahren nach Anspruch 1 oder 2, bei dem zum Erfassen des magnetischen Flusses ein Hall-Element verwendet wird.

4. Verfahren nach einem der vorhergehenden Anprüche, bei dem der erfaßte magnetische Fluß mit einem eingestellten Wert verglichen wird und der den elektromagnetischen Korrektureinrichtungen zugeführte Strom so gesteuert wird, daß der erfaßte magnetische Fluß diesem eingestellten Wert entspricht.

5. Verfahren nach einem der vorhergehenden Ansprüche, bei dem das Schweißverfahren ein verdecktes Lichtbogen-Verfahren ist.

6. Verfahren nach einem der Ansprüche 1 bis 4, bei dem das Schweißverfahren ein Elektroschlacke-Verfahren ist.

## Revendications

1. Procédé pour contrôler une opération de soudage où un courant électrique passe entre un feuillard-électrode et un métal de base à souder tout en déplaçant cette électrode le long d'une surface du métal de base, en excitant un moyen de correction électro-magnétique qui engendre un champ magnétique s'opposant à l'action du champ magnétique provoqué par le courant électrique passant par l'électrode et modifie l'écoulement du métal en fusion dans le bain de fusion formé pendant le soudage, en détectant le flux magnétique, provoqué par les champs magnétique combinés, et en contrôlant le courant appliqué au moyen de correction électro-magnétique conformément au flux détecté caractérisé en ce qu'un premier moyen de correction électromagnétique est prévu à côté d'un premier bord du feuillard-électrode, un second moyen de correction électro-magnétique est situé à côté d'un second bord du feuillard-électrode, le courant délivré au premier moyen de correction électromagnétique est contrôlé en fonction du flux détecté à proximité du bain de fusion d'un premier côté de l'axe géométrique du feuillard-électrode, et le courant délivré au second moyen de correction électro-magnétique est contrôlé en fonction du flux détecté à proximité du bain de fusion d'un second côté de l'axe géométrique du feuillard-électrode.

2. Un procédé selon la revendication 1 caractérisé en ce que chaque moyen de correction électro-magnétique a la forme d'une bobine.

3. Un procédé selon l'une quelconque des revendications 1 ou 2 caractérisé en ce qu'un élément Hall est utilisé pour détecter le flux magnétique.

4. Un procédé selon l'une quelconque des revendications 1, 2, 3, caractérisé en ce que le flux magnétique détecté est comparé à une valeur de consigne et le courant délivré au moyen de correction électro-magnétique est contrôlé en conséquence de telle sorte que le flux magnétique détecté corresponde à la valeur de consigne.

5. Un procédé selon l'une quelconque des revendications 1, 2, 3, 4, caractérisé en ce que l'opération de soudage est un procédé de soudage à l'arc sous flux électroconducteur.

6. Un procédé selon l'une des revendications 1 à 4 caractérisé en ce que l'opération de soudage est un procédé sous laitier électroconducteur.

## FIG. 1a

## FIG. 1b

Welding Advance
Direction

## FIG. 2a

## FIG. 2b

Welding Advance
Direction

# FIG.3

FIG_4

# FIG_5

# FIG. 6

## FIG.7a

## FIG.7b

# FIG_8

# FIG. 9a

# FIG. 9b

Electromagnetic Coil for External Magnetic Field (Right)

Electromagnetic Coil for External Magnetic Field (Left)

FIG.10a

FIG.10d

FIG.10b

FIG.10e

FIG.10c

FIG.10f